(19) Europäisches Patentamt / European Patent Office / Office européen des brevets

(11) **EP 2 655 262 B1**

(12) **EUROPEAN PATENT SPECIFICATION**

(45) Date of publication and mention
of the grant of the patent:
**08.02.2017 Bulletin 2017/06**

(51) Int Cl.:
*C02F 1/52* *(2006.01)*    *D06F 39/00* *(2006.01)*
*C02F 9/00* *(2006.01)*    *C02F 1/56* *(2006.01)*
*C02F 103/00* *(2006.01)*    *C02F 1/00* *(2006.01)*

(21) Application number: **11794752.3**

(22) Date of filing: **14.12.2011**

(86) International application number:
**PCT/EP2011/072679**

(87) International publication number:
**WO 2012/084619 (28.06.2012 Gazette 2012/26)**

(54) **FLOCCULATION PROCESS AND DEVICE**

FLOCKUNGSVERFAHREN UND VORRICHTUNG

PROCESSUS ET DISPOSITIF DE FLOCULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010 IN MU35212010
22.02.2011 EP 11155305**

(43) Date of publication of application:
**30.10.2013 Bulletin 2013/44**

(73) Proprietors:
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London EC4Y 0DN (GB)**
Designated Contracting States:
**CY GB IE MT**

(72) Inventors:
• **BISWAS, Sarmistha
Bangalore 560 066 (IN)**
• **CHATTERJEE, Debosree
Bangalore 560 066 (IN)**
• **GARG, Rajiv Kumar
Bangalore 560 066 (IN)**
• **SHRESTH, Rudra Saurabh
Bangalore 560 066 (IN)**
• **THIRUMENI, Dhanalakshmi
Bangalore 560 066 (IN)**

(74) Representative: **van Benthum, Wilhelmus A. J.
Unilever Patent Group
Olivier van Noortlaan 120
3133 AT Vlaardingen (NL)**

(56) References cited:
**JP-A- 2002 119 794**

**Description**

**Field of the invention**

The present invention is in the field of laundry processes and devices. In particular the invention relates to the saving of water.

**Background of the invention**

Washing processes, including laundry, mechanical dishwashing and other household cleaning processes, require large amounts of water throughout the world.

For example, commercially available front load washing machines use approximately 60 litres (of water for a normal full wash cycle, top load machines and hand wash processes require about 180-240 litres for the same cycle, depending on the number of rinse steps (2 or 3). Depending on the number of rinse steps, one quarter or one third of this volume is required for the main wash, while three quarters or two thirds are used for the two or three consecutive rinse steps.

The discarded water is a burden to waste water treatment facilities, or to the surface water supply in developing countries.

JP2002119794A discloses a washing machine capable of rapidly purifying washing water after use by promoting flocculation of pollutants containing surfactant solution. It further discloses a washing machine for the purification of washing water by utilising flocculation of pollutants. Washing water may be pumped into a primary flocculation device comprising polyaluminium chloride. Additionally a control valve may allow access of the washing water into a secondary flocculation device where a poly acrylamide solution may be added as a secondary flocculant. A separation unit could remove the flocculated mass and allow the washing water to return to the washing tub.

JP2002119794A further suggests a filter for solid liquid separation selected from nonwoven fabric, a wire gauze and a filter paper. The present inventors have found that the re-use of non-woven material is a problem, while the wire gauze does not retain the flocs, and filter paper will not sustain the pressure. It is found that flocs that are formed under the conditions of JP2002119794A cause the filter to clog after one or a few cycles. It remains to be desired clarify water in a washing machine, without the need to replace the filter.

Similarly, JP2001054700A, JP2001300191A and JP2001286697A disclose a method for the flocculation of dirt in laundry liquor. However, this is done by collecting the laundry water after use and flocculating and separating the flocs in separate holding tanks. The required time for such processes is considered to be too long if it needs to be done for small discrete parts of the wash liquor, during the process, or will require a second 60 L holding tank, which is also not appreciated by the consumer.

Hence, effective separation of the flocs as obtained in the art, particularly in a continuous process remains to be desired.

Accordingly it is an object of the present invention to reduce the water consumption in conventional washing methods, especially machine washing methods.

It is a further object to provide a washing process that produces waste water which brings a lower burden on the environment, especially the surface water.

It is yet a further object to provide a process that enables the separate disposal of solid waste coming from the wash process.

It is yet a further object to provide a process that removes surfactant for the wash liquor.

It is a further object of the invention to continuously clarify and/or purify washing water, especially during the wash cycle.

Surprisingly we have found that the continuous pH controlled sequential dosing of an electrolyte, followed by dosing of a polymer and a solid liquid separation step during a full wash cycle of a washing machine, wherein the electrolyte dose is controlled by the pH after dosing of the electrolyte, provides continuous clarification of the wash liquor and enables the continuous reuse of the water during said wash cycle, with flocs that are easier to separate from the liquor.

**Summary of the invention**

Accordingly, the present invention provides a process for continuous purification of wash water from a chamber using a sequential device comprising a first dosing point, in fluid communication with a first mixing point; in fluid communication with a second dosing point, in fluid communication with a second mixing point; in fluid communication with a solid/liquid separator unit, in fluid communication with the chamber wherein the process comprises the steps of: pumping the water from the chamber into the sequential device; continuous, stepped or pulsed dosing of an electrolyte composition selected from aluminium and ferric salts to the wash water at the first dosing point; continuous dosing of a polymer composition comprising neutral or anionically modified poly acryl amide polymer (MW > 100 kD) to the wash water at the second dosing point characterised in that the dosing of the electrolyte and the polymer is controlled by the pH of the water between the first mixing point and the second dosing point, wherein electrolyte is dosed until the pH drops to between 6.8 and 8.2.

In a second aspect the invention provides, a water clarification and purification device comprising an assembly for continuous purification of wash water from a chamber, using a sequential device comprising: a first dosing point, in fluid communication with a first mixing point; in fluid communication with a second dosing point, in fluid communication with a second mixing point; in fluid communication with a solid/liquid separator unit, in fluid communication with the chamber.

In a third aspect the invention provides a washing machine comprising the water purification and clarification device according to the invention, wherein the chamber is the washing machine tub or a separate wash water storage tank.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

The invention relates to the clarification and/or purification of wash water. This enables the consumer to use less water by reusing the same water for different steps in a wash process or even for different wash processes. The wash process may be a laundry cleaning process, a dish washing process or any other type of household washing process.

Accordingly, the invention provides a process for continuous wash water purification using a device and a process according to the invention.

## The device

Water from the chamber is transferred (e.g. pumped) into the sequential device according to the invention.

The sequential device comprises a first dosing point, in fluid communication with a first mixing point; in fluid communication with a second dosing point, in fluid communication with a second mixing point; in fluid communication with a solid/liquid separator unit, in fluid communication with the chamber comprising the remaining wash water.

In a preferred embodiment, the invention provides a washing machine comprising an assembly for continuous purification of wash water from a chamber, using a sequential device comprising a first dosing point, in fluid communication with a first mixing point; in fluid communication with a second dosing point, in fluid communication with a second mixing point; in fluid communication with a solid/liquid separator unit, in fluid communication with the chamber, wherein the chamber is the washing machine tub, or a separate wash liquor storage tank.

### Chamber comprising the wash water

The chamber comprising the wash water is preferably the washing machine tub itself, but may also be an intermediate storage chamber.

For household appliances, the chamber preferably holds between 1 and 100 litres of water. When the device is used in a standard top loader washing machine the volume is typically between 40 and 80 litres. When the device is used in a standard front load washing machine or an automatic dishwashing machine, the volume is typically between 10 and 20 litres. Small scale, low-end washing machine devices for developing markets for washing between 1 and 5 kg of laundry, preferably between 1 and 3 kg of laundry are also envisaged. For those devices the volume is typically between 10 and 20 litres of water. Industrial scale washing machines, typically holding from 50 to 250 litres of water are also contemplated in the context of the present invention.

### Mixing points

The device comprises at least two mixing points, each positioned in the water flow after the respective dosing points as discussed herein below.

First dosing point

The first dosing point typically comprises a dosing mechanism for dosing an electrolyte composition selected from aluminium and ferric salts to the wash water

The electrolyte composition may be a solid composition, a liquid composition, or anything in between, including pastes and gels.

The electrolyte may be any Al or/and Fe salt. They may be in pre-hydrolyzed form of bacisity (B = Al/OH). It is preferred that the basicity (B) is from 10 to 90, more preferably the basicity is in the range of 40-80.

For Al-salts the minimum solubility of Al-hydroxide is typically in the pH range of 6.8-7.5 whereas minimum solubility of Fe-hydroxide typically ranges from pH 4-8. Furthermore, the amount of solid precipitate generated in case of the system treated with Fe-salts is high as the solubility of Fe-hydroxide is lower than Al-hydroxide in the above stated respective pH ranges. This may be used to tune the precipitation kinetics, for instance by means of using combinations of the Al and Fe electrolyte salts. Thus system treated with Fe-salts would also require the pH to be controlled less minutely and hence is more robust. However the residual dissolved Fe-salts impart colour to the water which may have a negative impact on laundry fabrics and hence is less preferred. Combinations of Iron and Aluminium salts are also contemplated

The dosing is done continuously, when the device is in operation, as described herein below. The dosing is controlled by the pH of the water between the first mixing point and the second dosing point, wherein electrolyte is dosed to keep the pH within a range of 6.8 to 8.2, more preferably from 7 to 7.5.

When dosing until the pH has come inside the indicated pH range, the flocs are easier to separate from the treated wash liquor than at other pHs. Without wishing to be bound by a theory, it is thought that the flocculation kinetics that result from the process when operated until the pH is inside the indicated range, produce stronger and less sticky flocs that are easier to separate.

The required amount of electrolyte is dependent on the reserved alkalinity of the wash liquor and the amount of surfactant that is present in the wash liquor. Typically the amount of electrolyte is between 0.1 to 5 grams of electrolyte per litre of wash liquor, preferably more than 0.2 grams, more preferably more than 0.4 grams, ore even more than 0.5 grams per litre of wash liquor, but typically less than 3 grams, more preferably less than 2 grams, or even less than 1 gram of electrolyte per litre of wash liquor.

Second dosing point

The second dosing point typically comprises a dosing mechanism for dosing polymer composition preferably comprising a neutral or anionically modified polymer, having a high MW (>100 kD) to the wash water.

The molecular weight (MW) is typically less than 5000 kD, more preferably less than 2000 kD, still more preferably less than 1000 kD. The polymer is preferably water soluble.

For the avoidance of doubt by D (Dalton) is meant atomic mass unit (amu, the less commonly used SI unit).

The polymer composition may be a solid composition, a liquid composition, or anything in between, including pastes and gels. Pastes and gels typically require more time for dissolution and are therefore less preferred in the system according to the invention.

The polymer composition preferably comprises of neutral or anionically modified polyacrylamide polymer having molecular weight > 100kD.

The dosing is done continuously, when the device is in operation.

The required amount of polymer is dependent on the amount of solids generated by flocculation and the amount of undissolved solids in the wash liquor. Typically the amount of polymer is between 1 to 50 micrograms of polymer per litre of wash liquor, preferably between 2 and 20 micrograms of polymer per litre of wash liquor.

In a preferred embodiment, the dosing is controlled by the amount of solids generated by flocculation and the amount of undissolved solids in the wash liquor to further reduce the usage and minimise the deposition of the flocs in the system between the polymer dosing point and the filter.

Mixing

After each of the dosing points the wash liquor is mixed with the dosed material (electrolyte and polymer and/or pH buffer). The mixing may be done in any conventional way. It is preferred that the mixing of wash water with the flocculants is done in a tube or Continuous Stirred Tank Reactor (CSTR) system. The tube is found to provide a faster process and more efficient process. When a tube used, the length and diameter of tubes may be used to tune the residence time of mixing for a given flow rate, which will determine the efficiency of flocculation process. The tube length and diameter are found to have an effect on the size and strength of floc. The stronger and bigger the floc, the easier the solid liquid separation is in the continuous system. It is found that even a nylon gauze filter may used, when the length of the tube is in the range of 5 - 50 meter, more preferably 5 - 20 meter, the flow rate is between 1 - 10 L/min, more preferably 1 - 5 L/min and inner diameter of the tube is between 4 - 15 mm, more preferably 5 - 11 mm.

Solid/liquid separator unit

After the successive dosing of the electrolyte composition and the polymer composition to the wash liquor, flocs are formed.

The flocs are removed from the wash liquor by means of a solid/liquid separator unit.

The solid/liquid separator unit may be a filter. The filter may be a limited use disposable filter, a long time use disposable filter or a cleanable multi-use filter. A cleanable multi use filter is preferred to minimize the solid waste. The filter may be made of non-woven poly-propylene, acrylic, cellulose based polymers (including rayon and cotton), nylon, fluoro polymers or polyester; or a wire mesh, preferably a nylon mesh more preferably nylon mesh of $\leq$130 micrometer pore size. When in operation, the flocs are retained on the filter, while the clarified liquid is recycled back to the chamber.

Typically the filter area is related to the flow rate in such a way that the permeate flow rate is between 500 and 5000 LMH (litre/m2/hr), preferably at least 800 LMH, more preferably at least 1000 LMH, ore even more than 1200 LMH, while typically less than 4000 LMH, more preferably less than 3000 LMH, or even less than 2200 LMH.

Typically a filter will give a back pressure of between 0.1 to 2 bar, preferably less than 1.5 bar, or even less than 1 bar; depending on the flow rate and the surface area and pore size of the filter.

Alternatively the solid/liquid separator unit may be a settler tank. However, since a settler tank inherently involved a large dead volume, this is not the most preferred option.

The solid/liquid separator unit may also be centrifugal separators like hydro cyclone, wherein the solid flocs are collected in a detachably attachable sump, while the clarified liquid is returned to the chamber.

For the avoidance of doubt, the solid/liquid separation techniques based on gravity (e.g. settler tanks) may yield a deposit of flocs at the bottom of the tank, when the flocs have a density that is greater than the density of the liquor, while the flocs may float on top when the density of the flocs is lower than the density of the liquor. Similar conditions apply to other gravity based separation techniques, such as centrifugation.

The flocs that are formed typically have a diameter of between 0.5 mm - 3 cm. It is understood that the flocs are not perfectly spherical and generally have an irregular shape; for the purpose of this invention, diameter is defined as the longest distance from one side to another in the floc, also known as the major axis of the floc.

The flocs typically have a density of between 0.5 and 2.5 g/mL, more preferably between 0.8 and 1.5 g/mL. The device according to the invention is characterised by a control system for dosing of the electrolyte, wherein electrolyte is dosed until the pH of the wash water between the first mixing point and the second dosing point drops to between 6.8 and 8.2. The control system may be any conventional for dosing the electrolyte until the pH readout in the wash water between the first mixing point and the second dosing point is within the indicated range. Preferably the dosing of the polymer at the second dosing point is also connected to the same control system, although it is considered in the context of the invention that the polymer dosing is continued for at least some time after the dosing of the electrolyte is stopped, wherein some time is defined as any time between the end of the electrolyte dosing and the time that is required for recirculating the wash water through the device one time; in other words until the full volume of water in the system is passed by the second dosing point one more time.

Optionally the device comprises an additional dosing point for dosing the detergent for washing. The dosing of detergent is preferably done in the tub of the machine. The detergent may be a conventional liquid, or powder. Alternatively, the detergent may be in the form of table, wherein the tablet may be a single unit dose, or where in two or more tablets may be dosed depending on the degree of soiling or on the wish of the consumer. Other formats, like detergent pellets, crystals, pearls, or other formats are also contemplated.

## Process

The process for the clarification and/or purification of wash water is preferably operated continuously in a wash process. Alternatively, the process may be operated by withdrawing a fraction of the wash liquor and treating the fraction batch wise with the clarified water poured back in the main wash tub while the washing continues. However this process may increase the total time required to cleanup the laundry wash liquor and an extra storage container, and is therefore less preferred.

In the process the dirty wash water is transferred into the sequential device according to the invention. This is preferably done by means of a pump.

Dosing of the electrolyte composition

The continuous dosing of an electrolyte composition selected from aluminium and ferric salts to the wash water is done at the first dosing point. The first dosing point may be a liquid dosing point into the sequential device, or a solid dosing point. In case a liquid dosing point is used, the dosing may for example be achieved by a metering pump or by dosing from a pressurised dosing vessel. Valves for accurate dosing are also considered. In case a solid dosing point is used, the dosing may for example be achieved by using a dosing screw or by dosing pre made tablets of the electrolyte composition, whereby the tablet size is such that the amount of electrolyte per tablet is between one tenth to one thousandth of the total amount of electrolyte, preferably between one twentieth and one five hundredth, more preferably between one fiftieth and one two hundredth, to achieve differential dosing.

Without wishing to be bound by a theory, it is found that although in regular charge based aggregation, aggregates are formed by particles sticking together, this would not work in the presence of surfactants, commonly present in cleaning/washing liquor, due to the surface adsorption of surfactants, causing steric stabilisation of particles. In the system of the present invention, flocs are formed by the precipitation of metal hydroxides, which form a porous network and physically sweep out the particles. This process is typically referred to in literature as "sweep flocculation". It is found that in case of sweep flocculation the in-situ generated $Al(OH)_3$ or $Fe(OH)_3$ may deplete the surfactant from the wash or rinse liquor. It is understood that the surfactant gets depleted by adsorbing on the surface of positively charged $Al(OH)_3$ or $Fe(OH)_3$ particles. Therefore Sweep flocculation is the preferred route for the particle aggregation, for laundry liquor containing both surfactants and alkalinity.

After the dosing of the material the wash water continues through the device and is mixed in the first mixing point, before flowing to the second dosing device.

The dosing of electrolyte has to follow a certain profile which is exponential in nature according to the following relation (formula 1):

$$C_t^{Electrolyte} = C_0^{Electrolyte} e^{-v_0 t/V} \qquad \text{(formula 1)}$$

Wherein:

$C_t^{Electrolyte}$    means the concentration of electrolyte at any time t
$C_0^{Electrolyte}$    means the concentration of electrolyte at time t=0
$v_0$    means the volumetric flow rate at time=t at which the wash liquor is drawn from the wash
V    means is the total volume of wash liquor to be treated.

The dosing of electrolyte preferably follows the above stated profile as a continuous, step or pulsed function. $C_0$ depends on the concentration of electrolyte required to flocculate the wash water in a batch process.

By applying this preferred dosing profile the pH of the water in between the first mixing point and the second dosing point will remain close to constant. To further improve the flocculation efficiency, it is also contemplated to co-dose a small amount of pH buffer separately or together with the electrolyte.

Preferred buffers may include any know buffer, having a pKa value in the indicated pH range of 6.8 - 8.2 as described in the electrolyte section above. Preferred buffers include carbonate buffers, phosphate buffers,

Dosing of the polymer composition.

The continuous dosing of a polymer composition, comprising a neutral or anionically modified poly acryl amide polymer (MW > 100 kD) to the wash water is done at the second dosing point.

At the second dosing point the polymer is dosed to the wash liquor. After dosing, the concentration of polymer in the line is preferably in the range of 2-20ppm. The actual amount dosed is depending on the total solid generated in the process; the more solids in solution, the more polymer is preferred, as indicated in the polymer section above. For example, the polymer concentration for dirty main wash liquor is typically between 10 and 20 ppm, while the polymer dosing for the final rinse is typically in the range of 2 and 10 ppm. It is understood that ppm means microgram per litre.

It is known that the long chain polymers can adsorb on particle surfaces and thereby bring them together to form bigger and stronger aggregates (flocs) thereby facilitates filtration, settling or separation by any other solid liquid separation process. In other words, the polymer is thought to bridge the various precipitation nuclei to form a larger aggregate system.

After the dosing point for the polymer composition, the water flows on to the second mixing point.

The dosing of polymer is done continuously following a predetermined dosing profile.

In a preferred embodiment, the dosing is controlled by the amount of solids generated by flocculation and the amount of undissolved solids in the wash liquor to further reduce the usage and minimise the deposition of the flocs in the system between the polymer dosing point and the filter.

It is thought that the polymer's adsorption efficiency is regulated by the surface characteristics/nature of floc in presence of surfactant. To favour the polymer adsorption, it is preferred that the right floc surface characteristics in terms of surface property which can be achieved by the above indicated electrolyte dosage and thereby controlling the pH of water.

By dosing the electrolyte until the desired pH is reached, it is found that this provides improved clarification of wash water, efficient adsorption of polymer onto the flocs and it maintains a minimum concentration of dissolved metal in the treated water (wash liquor).

**Drawings**

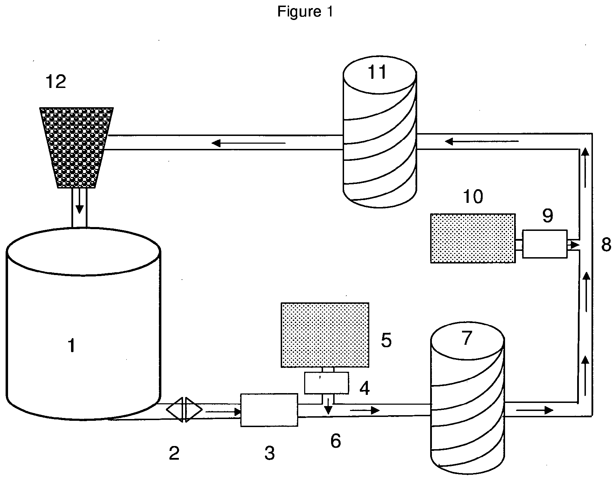

A schematic drawing of a system according to the invention is shown in figure 1.

In figure 1, the wash water is in the Wash tub (1). The tub is connected to an optional valve (2) and a main pump (3), followed by the first dosing point (6), which is further connected to a Metering pump for electrolyte (4), which is in turn connected to an Electrolyte dosing chamber (5). The liquid then flows to the first mixing point (7), followed the second dosing point (8, which is further connected to a pump for polymer (9), which is in turn connected to a polymer dosing chamber (10). The liquid then flows to the second mixing point (11), and through a filter (12), to be returned to the tub.

**Examples**

The invention will now be illustrated by means of the following non-limiting examples.

Example 1: pH controlled dosage of electrolyte vs constant dosage

In this example the effect of pH controlled dosage of electrolyte compared to constant dosage is demonstrated.

In example 1 a device according to the invention is use, having a tub with a wash liquor volume of 20 L, a first dosing point for electrolyte, a mixing coil, a second dosing point for polymer, another mixing coil and a nylon mesh (130 micrometer cutoff) filter of 0.075 $m^2$ and returned to the main wash tub.

20 L of model wash liquor was pre made. The model wash liquor contained 2 g/L of Model detergent.

Wash liquor

| Ingredient | concentration |
|---|---|
| Model detergent | 2 g/L |
| Kaoline | 0.25 g/L |

The model detergent had the following composition:

Model detergent

| Ingredients | Concentratio n (% as is) |
|---|---|
| Sodium linear alkylbenzene sulphonate (ex Reliance chemicals, India) | 16 |
| Soda (ex Tata chemicals, India) | 30 |
| Sodium Tripolyphosphate (ex Rhodia) | 2 |
| Calcite, (Forcal U, ex Saurashtra Solid Industry Pvt Ltd, India) | 10 |
| Sodium carboxymethyl cellulose (ex Merck) | 1.5 |
| Sodium chloride (ex Nirma chemicals limited, India) | 36 |
| Moisture | 4.5 |

The wash liquor (20L) was pre made and drawn from the tub at a flow rate of 2.5 L/min, the electrolyte (PAC, polyaluminium chloride (B=60)) was dosed at the first dosing point at a first concentration ($c_0$) of 0.7 g/L and then followed by the profile according to the equation of formula 1 above and put through the first mixing point (a PVC coil of 10 m length, inner diameter of 8.5 mm); thereafter the polymer was dosed at the second dosing point at a concentration of 3 microgram/L and put through the second mixing point (a PVC coil of 10 m length, inner diameter of 8.5 mm); thereafter the liquid is passed through a filter (nylon gauze filter of 0.075 m$^2$ having a 130 micrometer pore size) to remove the flocs and passed back to the tub.

In comparative example A the same set up and device were used, but now, the electrolyte is dosed continuously at a constant rate to 0.2 g/L in the wash liquor in the line after the dosing point.

The total amount of electrolyte dosed in the example and the comparative example is identical.

Results

The tables below show how the turbidity and the pH are changing in time for both the filtrate and the tub.

During processing it became immediately clear in the example large flocs, while much smaller particles were found in the comparative example

|  | After 1st coil | After 2nd coil |
|---|---|---|
|  | Floc size (micrometer) | Floc size (mm) |
| Example 1 | 3 - 90 | 0.5 - 10 |
| Comp A | 0.2 - 1 | 0.0005 - 0.002 |

It was also found that the filtrate water in the example was immediately clear, and also the water in the tub became clear quickly, whereas the filtrate water in the comparative example was still turbid, consequently resulting in turbid wash water in the tub. Turbidity data is given in the tables below.

Results Example 1

|  | Tub | | Filtrate | |
|---|---|---|---|---|
| Time (minutes) | Turbidity (NTU) | pH | Turbidity (NTU) | pH |
| 0 | 508 | 10.88 |  |  |
| 2 |  |  | 4.28 | 7.54 |
| 5 | 238 | 10.2 | 1.2 | 7.31 |
| 10 | 90 | 9.61 | 1.01 | 7.33 |
| 15 | 57 | 7.96 | 0.75 | 7.24 |
| 20 | 34 | 7.46 | 1.2 | 7.2 |
| 25 | 16.2 | 7.42 | 0.65 | 7.05 |
| 30 | 8.02 | 7.16 | 0.81 | 6.94 |
| 35 | 5.11 | 7.03 | 1.04 | 6.8 |
| 45 | 2.61 | 6.72 | 4.2 | 6.62 |

Results Comparative example A

|  | Tub | | Filtrate | |
|---|---|---|---|---|
| Time (minutes) | Turbidity (NTU) | pH | Turbidity (NTU) | pH |
| 0 | 515 | 10.77 |  |  |
| 2 |  |  | 556 | 10.05 |
| 5 | 580 | 10.4 | 570 | 9.68 |
| 10 | 555 | 10.06 | 390 | 9.42 |

(continued)

| Time (minutes) | Tub | | Filtrate | |
| --- | --- | --- | --- | --- |
| | Turbidity (NTU) | pH | Turbidity (NTU) | pH |
| 15 | 496 | 9.65 | 262 | 9.19 |
| 25 | 174 | 9.11 | 6.93 | 8.05 |
| 30 | 103 | 8.81 | 4.02 | 7.48 |
| 35 | 51.3 | 8.12 | 1.32 | 6.94 |
| 45 | 32.7 | 7.06 | 58.9 | 6.35 |
| 47 | 47.2 | 6.91 | 75.3 | 6.27 |

The tables above show that the pH in the example quickly decreases to the required value and remains constant at that value, while the pH in the comparative example goes down following an almost linear profile. They also show that the turbidity of the filtrate in the example drops to a very low level from the start and remains low throughout the process, while the turbidity in the comparative example is much higher throughout the process, resulting in a low turbidity tub water in the example, against a comparatively high turbidity in the tub in the comparative example.

## Claims

1. A process for continuous purification of wash water from a chamber (1) using a sequential device comprising:

   a a first dosing point (6), in fluid communication with
   b a first mixing point (7); in fluid communication with
   c a second dosing point (8), in fluid communication with
   d a second mixing point (11); in fluid communication with
   e a solid/liquid separator unit (12), in fluid communication with
   f the chamber (a)

   wherein the process comprises the steps of:

   a pumping the water from the chamber (1) into the sequential device;
   b continuous, stepped or pulsed dosing of an electrolyte composition selected from aluminium and ferric salts to the wash water at the first dosing point;
   c continuous dosing of a polymer composition comprising neutral or anionically modified poly acryl amide polymer (MW > 100 kD) to the wash water at the second dosing point (8)

   **characterised in that** the dosing of the electrolyte and the polymer is controlled by the pH of the water between the first mixing point (7) and the second dosing point (8), wherein electrolyte is dosed until the pH drops to between 6.8 and 8.2; and wherein the dosing of the electrolyte follows the dosing profile according to the formula:

   $$C_t^{Electrolyte} = C_0^{Electrolyte} e^{-v_0 t/V}$$

   wherein: $C_t^{Electrolyte}$ means the concentration of electrolyte at any time t, $C_0^{Electrolyte}$ means the concentration of electrolyte at time t=0, $v_0$ means the volumetric flow rate at time=t at which the wash liquor is drawn from the wash and V means the total volume of wash liquor to be treated.

2. A process according to claim 1, where a buffer composition is added together with either the electrolyte or the polymer at their respective dosing points.

3. A process according to anyone of claims 1 or 2, wherein the solid/liquid separator unit (12) comprises a:

   a particle filter; or

b a hydro cyclone; or
c a settling chamber;

or combinations thereof.

**4.** A water clarification and purification device for operating the process according to anyone of the preceding claims, comprising an assembly for continuous purification of wash water from a chamber (1), using a sequential device, in fluid communication with the chamber (1) comprising:

a a first dosing point (6), connected to an electrolyte source, in fluid communication with
b a first mixing point (7); in fluid communication with
c a second dosing point (8), connected to a source of neutral or anionically modified poly acryl amide, in fluid communication with
d a second mixing point (11); in fluid communication with
e a solid/liquid separator unit (12), in fluid communication with
f the chamber (a)

**characterised by** a control system adapted for dosing of the electrolyte following the dosing profile according to the formula:

$$C_t^{Electrolyte} = C_0^{Electrolyte} e^{-v_0 t/V}$$

wherein: $C_t^{Electrolyte}$ means the concentration of electrolyte at any time t, $C_0^{Electrolyte}$ means the concentration of electrolyte at time t=0, $v_0$ means the volumetric flow rate at time=t at which the wash liquor is drawn from the wash and V means the total volume of wash liquor to be treated; and wherein electrolyte is dosed until the pH of the wash water between the first mixing point (7) and the second dosing point (8) drops to between 6.8 and 8.2.

**5.** A washing machine comprising the water clarification and purification device according to claim 4, wherein the chamber (1) is the washing machine tub or a separate wash water storage tank.

**Patentansprüche**

**1.** Verfahren zur kontinuierlichen Reinigung von Waschwasser von einer Kammer (1) unter Verwendung einer sequentiellen Vorrichtung, die Folgendes umfasst:

a einen ersten Dosierungspunkt (6); in Fluidkommunikation mit
b einem ersten Mischpunkt (7); in Fluidkommunikation mit
c einem zweiten Dosierungspunkt (8); in Fluidkommunikation mit
d einem zweiten Mischpunkt (11); in Fluidkommunikation mit
e einer Einheit (12) zum Trennen von Feststoff/Flüssigkeit; in Fluidkommunikation mit
f der Kammer (a);

wobei das Verfahren die folgenden Schritte umfasst:

a Pumpen des Wassers von der Kammer (1) in die sequentielle Vorrichtung;
b kontinuierliches, abgestuftes oder pulsweises Dosieren einer Elektrolytmischung, die aus Aluminium- und Eisensalzen ausgewählt wird, zu dem Waschwasser bei dem ersten Dosierungspunkt;
c kontinuierliches Dosieren einer Polymermischung, die neutrales oder anionisch verändertes Polyacrylamidpolymer (MW > 100 kD) umfasst, zu dem Waschwasser bei dem zweiten Dosierungspunkt (8);

**dadurch gekennzeichnet, dass** die Dosierung des Elektrolyts und des Polymers durch den pH-Wert des Wassers zwischen dem ersten Mischpunkt (7) und dem zweiten Dosierungspunkt (8) gesteuert wird, wobei der Elektrolyt dosiert wird, bis der pH-Wert auf einen Wert im Bereich von 6,8 bis 8,2 abfällt; und wobei die Dosierung des Elektrolyts dem Dosierungsprofil nach der folgenden Formel folgt:

$$C_t^{\text{Elektrolyt}} = C_0^{\text{Elektrolyt}} \cdot e^{-\frac{v_0 t}{V}} \; ,$$

wobei $C_t^{\text{Elektrolyt}}$ die Konzentration des Elektrolyts zu einem beliebigen Zeitpunkt t ist, $C_0^{\text{Elektrolyt}}$ die Konzentration des Elektrolyts zum Zeitpunkt t = 0 ist, $v_0$ der Volumendurchfluss zum Zeitpunkt t ist, zu dem die Waschflüssigkeit von der Wäsche abgezogen wird, und V das Gesamtvolumen von zu behandelndem Waschwasser ist.

2. Verfahren nach Anspruch 1, wobei eine Puffermischung zusammen mit dem Elektrolyt oder dem Polymer an ihren jeweiligen Dosierungspunkten zugegeben wird.

3. Verfahren nach einem der Ansprüche 1 oder 2, wobei die Einheit (12) zum Trennen von Feststoff/Flüssigkeit Folgendes umfasst:

    a einen Partikelfilter; oder
    b einen Hydrozyklon; oder
    c eine Kammer zum Absetzen;

    oder Kombinationen davon.

4. Wasserklärungs- und Wasserreinigungsvorrichtung zum Durchführen des Verfahrens nach einem der vorhergehenden Ansprüche, die eine Anordnung zur kontinuierlichen Reinigung von Waschwasser von einer Kammer (1) unter Verwendung einer sequentiellen Vorrichtung in Fluidkommunikation mit der Kammer (1) umfasst, wobei die Vorrichtung Folgendes umfasst:

    a einen ersten Dosierungspunkt (6), der mit einer Elektrolytquelle verbunden ist; in Fluidkommunikation mit
    b einem ersten Mischpunkt (7); in Fluidkommunikation mit
    c einem zweiten Dosierungspunkt (8), der mit einer Quelle für neutrales oder anionisch verändertes Polyacrylamid verbunden ist; in Fluidkommunikation mit
    d einem zweiten Mischpunkt (11); in Fluidkommunikation mit
    e einer Einheit (12) zum Trennen von Feststoff/Flüssigkeit; in Fluidkommunikation mit
    f der Kammer (a);

    **gekennzeichnet durch** ein Steuerungssystem, das für eine Dosierung des Elektrolyts ausgelegt ist, wobei dem Dosierungsprofil nach der Formel gefolgt wird:

$$C_t^{\text{Elektrolyt}} = C_0^{\text{Elektrolyt}} \cdot e^{-\frac{v_0 t}{V}} \; ,$$

    wobei $C_t^{\text{Elektrolyt}}$ die Konzentration des Elektrolyts zu einem beliebigen Zeitpunkt t ist, $C_0^{\text{Elektrolyt}}$ die Konzentration des Elektrolyts zum Zeitpunkt t = 0 ist, $v_0$ der Volumendurchfluss zum Zeitpunkt t ist, zu dem die Waschflüssigkeit von der Wäsche abgezogen wird, und V das Gesamtvolumen von zu behandelndem Waschwasser ist; und wobei der Elektrolyt dosiert wird, bis der pH-Wert des Waschwassers zwischen dem ersten Mischpunkt (7) und dem zweiten Dosierungspunkt (8) auf einen Wert im Bereich von 6,8 bis 8,2 abfällt.

5. Waschmaschine, die die Wasserklärungs- und Wasserreinigungsvorrichtung nach Anspruch 4 umfasst, wobei die Kammer (1) der Waschmaschinenbottich oder ein getrennter Waschwasseraufbewahrungstank ist.

## Revendications

1. Procédé pour une purification continue d'eau de lavage à partir d'une chambre (1) utilisant un dispositif séquentiel comprenant :

    a un premier point de dosage (6), en communication fluide avec
    b un premier point de mélange (7) ; en communication fluide avec
    c un second point de dosage (8), en communication fluide avec
    d un second point de mélange (11) ; en communication fluide avec

e une unité de séparateur solide/liquide (12), en communication fluide avec
f la chambre (a)

dans lequel le procédé comprend les étapes de :

a pompage de l'eau à partir de la chambre (1) dans le dispositif séquentiel ;
b dosage continu, échelonné ou pulsé d'une composition d'électrolyte choisie parmi des sels d'aluminium et ferriques à l'eau de lavage au premier point de dosage ;
c dosage continu d'une composition polymère comprenant un polymère de polyacrylamide neutre ou anioniquement modifié (MW>100 kD) à l'eau de lavage au second point de dosage (8)

**caractérisé en ce que** le dosage de l'électrolyte et du polymère est contrôlé par le pH de l'eau avant le premier point de mélange (7) et le second point de dosage (8), dans lequel l'électrolyte est dosé jusqu'à ce que le pH chute entre 6,8 et 8,2 ; et
dans lequel le dosage de l'électrolyte suit le profil de dosage selon la formule :

$$C_t^{Electrolyte} = C_0^{Electrolyte} e^{-v_0 t/V}$$

où : $C_t^{Electrolyte}$ indique la concentration en électrolyte au temps t, $C_0^{Electrolyte}$ indique la concentration en électrolyte au temps t=0, $v_0$ indique le débit volumétrique au temps = t auquel la liqueur de lavage est soutirée du lavage et V indique le volume total de liqueur de lavage à traiter.

2. Procédé selon la revendication 1, dans lequel une composition tampon est ajoutée avec soit l'électrolyte soit le polymère à leur point de dosage respectif.

3. Procédé selon l'une quelconque des revendications 1 ou 2, dans lequel l'unité de séparateur solide/liquide (12) comprend un :

a filtre à particules ; ou
b un hydrocyclone ; ou
c une chambre de dépôt ;

ou des combinaisons de ceux-ci.

4. Dispositif de clarification et de purification d'eau pour faire fonctionner le procédé selon l'une quelconque des revendications précédentes, comprenant un assemblage pour une purification continue d'eau de lavage à partir d'une chambre (1), utilisant un dispositif séquentiel, en communication fluide avec la chambre (1) comprenant :

a un premier point de dosage (6), connecté à une source d'électrolyte, en communication fluide avec
b un premier point de mélange (7) ; en communication fluide avec
c un second point de dosage (8), connecté à une source de polyacrylamide neutre ou anioniquement modifié, en communication fluide avec
d un second point de mélange (11) ; en communication fluide avec
e une unité de séparateur solide/liquide (12), en communication fluide avec
f la chambre (a)

**caractérisé par** un système de contrôle adapté pour doser l'électrolyte suivant le profil de dosage selon la formule

$$C_t^{Electrolyte} = C_0^{Electrolyte} e^{-v_0 t/V}$$

où : $C_t^{Electrolyte}$ indique la concentration en électrolyte au temps t, $C_0^{Electrolyte}$ indique la concentration en électrolyte au temps t=0, $v_0$ indique le débit volumétrique au temps=t auquel la liqueur de lavage est soutirée du lavage et V indique le volume total de liqueur de lavage à traiter ; et dans lequel l'électrolyte est dosé jusqu'à ce que le pH de l'eau de lavage entre le premier point de mélange (7) et le second point de dosage (8) chute entre 6,8 et 8,2.

5. Machine de lavage comprenant le dispositif de clarification et de purification d'eau selon la revendication 4, dans laquelle la chambre (1) est la cuve de machine de lavage ou un récipient de stockage d'eau de lavage séparé.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002119794 A
- JP 2001054700 A
- JP 2001300191 A
- JP 2001286697 A